# EUROPEAN PATENT SPECIFICATION

(11) **EP 0 551 271 B1**
(45) Date of publication and mention of the grant of the patent: **28.06.1995**
(21) Application number: 91907978.0
(22) Date of filing: 22.04.1991
(51) Int. Cl.: F01L 3/06, F01L 1/28

(54) **VALVE MECHANISM**
VENTILMECHANISMUS
MECANISME DE SOUPAPE

(30) Priority: 04.10.1990 GB 9021600
(43) Date of publication of application: 21.07.1993
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: MA, Thomas Tsoi-Hei, Chelmsford, Essex CM3 5YB (GB)
(74) Representative: Messulam, Alec Moses
(86) International application number: GB9100625
(87) International publication number: WO9206283

(56) References cited:
- FR-A- 2 588 041
- GB-A- 2 196 386
- PATENT ABSTRACTS OF JAPAN vol. 7, no. 116 (M-216)(1261) 20 May 1983 & JP,A,58 035 211 ( TOYO KOGYO K.K. ) 1 March 1983
- PATENT ABSTRACTS OF JAPAN vol. 7, no. 50 (M-197)(1195) 26 February 1983 & JP,A,57 200 609 ( FUJI JUKOGYO K.K. ) 8 December 1982

## Description

### Field of the invention

The present invention relates to a valve mechanism for an internal combustion engine which enables the flow restriction through a poppet valve to be varied.

### Background of the invention

The capability to throttle the air flow at a valve is desirable because it allows a high charge velocity to be maintained at the valve seat regardless of load. It also has the effect of reducing manifold vacuum and this in turn reduces pumping losses.

A known way of obstructing a port to regulate the engine load is to provide what is sometimes termed valve throttling by varying the valve lift. However, achieving variable valve lift by altering the drive train is difficult and expensive.

There have been also proposals to use movable valve guides in the intake port of an internal combustion engine to enable throttling to take place at the intake port. Such throttling under low load conditions is preferable to a throttle mounted further upstream in the intake manifold but is less desirable than valve throttling.

GB-2 196 386 and GB-1 236 722, for example, show valve guides which are rotatable about the axis of the valve and axially displaceable parallel to the valve in order to restrict the port geometry at low loads with the aim of increasing the velocity of the charge and the charge turbulence. The disadvantage of such arrangements is that the movable valve guides obstruct the port at high load and a drive mechanism of some form is required in order to position the valve guide as desired.

There has also been proposed in US-3,881,459, a poppet valve which has two separate sealing surfaces, thereby forming one valve within another valve. In this case, there are two concentric valve mechanisms, both of which are driven by the valve train and have fixed valve lift which cannot be varied with the engine operating conditions.

### Object of the invention

The present invention seeks to provide a valve mechanism which allows variable throttling to be achieved in the immediate vicinity of the valve, without obstructing the port at high load and without requiring modification to the valve drive train.

### Summary of the invention

According to the present invention, there is provided a valve mechanism disposed within a port of an internal combustion engine, comprising a poppet valve reciprocable with constant stroke relative to a valve seat in the engine cylinder head under the action of a valve drive train, a valve guide interposed between the poppet valve and the engine cylinder head and reciprocably driven, through a spring, by the drive train of the poppet valve in a direction to follow the movements of the poppet valve, and an adjustable stop for limiting the stroke of the valve guide relative to the valve seat such that the guide may be stopped at a variable point in its stroke, the end of the valve guide near the valve seat then presenting a variable obstruction to the air flow independently of the position of the poppet valve in relation to the valve seat.

Preferably, the valve guide is shaped as a thin sleeve having a complementary shape to that of the poppet valve. In this way, when they move together at high engine load, the poppet valve and its guide behave as a conventional one piece poppet valve. However, at low load the skirt of the poppet valve separates from the trumpet-like lower end of the valve guide so that the latter continues to provide the desired valve throttling without the need to vary the stroke of the poppet valve itself.

Because the valve guide is driven through a spring rather than directly from the same cam as used for driving the poppet valve, relative movements between the poppet valve and the valve guide can be accommodated by compression of the spring. This spring acts in the opposite direction to the spring of the poppet valve and it normally maintains the poppet valve and the guide in intimate contact. Separation of the valve guide from the poppet valve only occurs when the stroke of the valve guide is limited by the adjustable stop in the cylinder head.

### Brief description of the drawings

The invention will now be described further, by way of example, with reference to the accompanying drawings, in which:
Figure 1 is a section through a valve mechanism of the invention having a mechanical stop for limiting the stroke of the valve guide,
Figure 2a is a side elevation of the valve guide assembly in the embodiment of Figure 1,
Figure 2b is a plan view of the abutment clip fitted to the valve guide in Figure 2a,
Figure 3 is a section similar to that of Figure 1 through an embodiment of the invention having a hydraulic stop for limiting the stroke of the valve guide,
Figures 4a to 4d show the positions of the poppet valve and the valve guide under different throttle settings,
Figure 5 is a schematic representation of a hydraulic circuit for use with the embodiment illustrated in Figure 3, and
Figure 6 is a graph showing the relative throttling effect of the valve mechanism of the invention operated in conjunction with a conventional butterfly throttle arranged in the intake manifold.

### Detailed description of the preferred embodiments

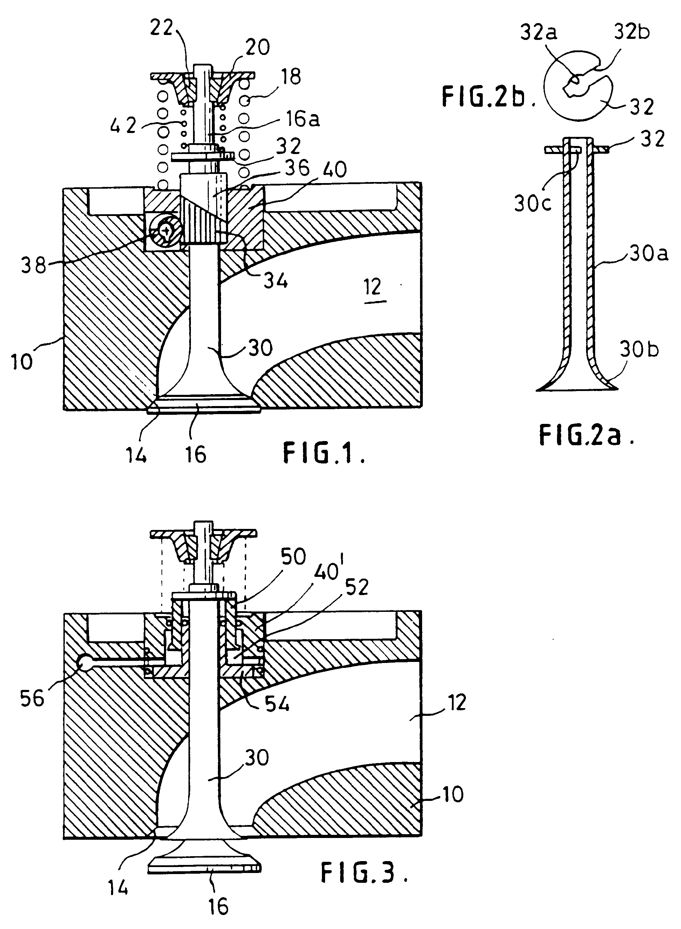

In Figure 1, there is shown a cylinder head 10 having a port 12, in this case an intake port, terminating at a valve seat 14. A poppet valve 16 having a valve stem 16a is reciprocable in the usual manner in the cylinder head 10 to open and close the valve in order to control the intake event. The poppet valve 16 is urged upwards, as viewed, by a spring 18 which acts on a spring retainer 20 secured to the valve stem 16a by means of collets 22.

A movable valve guide 30 surrounds the poppet valve 16 and is formed, as shown in Figure 2a by a thin sleeve 30a with a flared trumpet-like lower end 30b and a cut-out 30c in its upper end in which an abutment clip 32 is received. The abutment clip 32, as shown in Figure 2b, is a disc with a central aperture 32a and a radial slot 32b intersecting the aperture 32a. The slot 32b is narrower than the diameter of the valve stem 16a and the aperture 32a is of the same diameter as the valve stem 16a. Thus the clip 32 can be slipped into the cut-out 30c before introduction of the poppet valve 16 and when the stem 16a of the poppet valve 16 is passed through the aperture 32a it prevents the clip 32 from being withdrawn from the end of the valve guide 30.

The valve guide 30 fits closely over the valve stem 16 and itself passes through a pair of annular members 34, 36 recessed into the cylinder head 10 and together constituting a variable stop for the clip 32. The member 34 is externally toothed and can be turned by means of a gear 38, the two members 34, 36 and the gear 38 being mounted in an insert 40 which can be fitted into the cylinder head 10 as a complete sub-assembly during the installation of the valve mechanism. The members 34 and 36 have mating helical surfaces which result in the member 36 being displaced axially if the member 34 is turned relative to it. Thus, the member 36 is keyed for axial movement in the insert 40 and when the member 34 is rotated by the gear 38, the member 36 moves up and down in the cylinder head.

The clip 32 in the valve guide 30 is urged downwards, as viewed, by means of a spring 42 which acts between the retainer 20 and the clip 32 to move the valve guide 30 into contact with the poppet valve 16.

To assemble the valve mechanism, the insert 40 is dropped into the cylinder head 10 complete with the annular members 34 and 36 and the worm gear 38 in their desired positions. The valve guide 30 is next pushed through the cylinder head 10 and annular members 34, 36 and the clip 32 is fitted to the end of the guide 30 which projects beyond the member 36. The poppet valve 16 is next pushed into the guide 30 and on passing through the clip 32 prevents the latter from being withdrawn. The springs 42 and 18 are slipped over the valve stem 16a, the spring 42 coming to rest on the clip 32 and the valve spring 18 abutting the insert 40. The retainer 20 is then fitted over the valve stem 16 and depressed until it clears the neck of the valve stem, the collets 22 are inserted inside the retainer 20 in the usual manner and the retainer is then released to lock the collets into the neck of the valve stem 16a.

In this assembled condition, the insert 40 is held in place by the valve spring 18, the poppet valve is held against the seat 14 by the same valve spring 18 and the valve guide is urged downwards into contact with the poppet valve 16 by the spring 42.

During operation, a cam will act through a tappet on the valve stem 16a to move the valve to its open position in which the lower end of the poppet valve 16 lifts off the valve seat 14 to allow the intake charge to enter the combustion chamber.

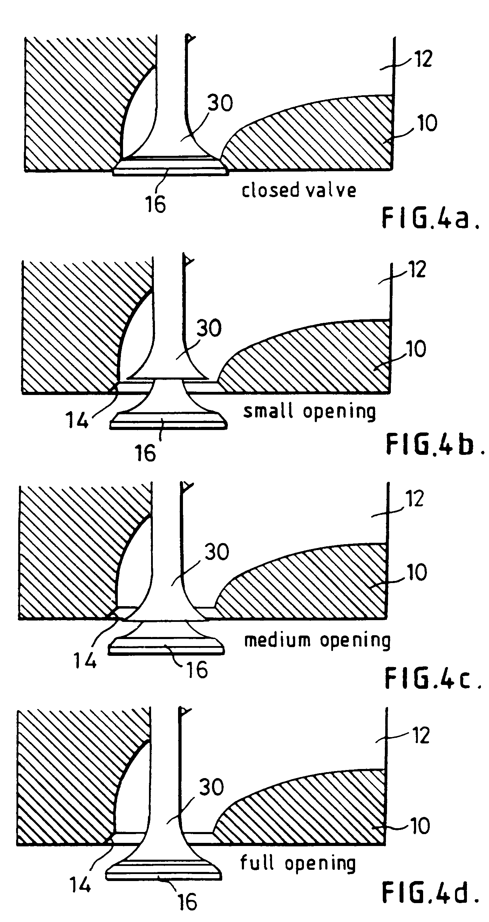

Assuming now that the member 36 is in its lowermost position where it is further away from the clip 32 than the stroke of the tappet. In this position, the clip 32 never reaches the member 36 and the guide 30 reciprocates with the same amplitude as the poppet valve 16. Therefore, when the valve is closed the poppet valve 16 and the guide 30 will adopt the positions shown in Fig. 4a and when fully open they will adopt the positions shown in Fig. 4d. It will clear from these two drawings, that the poppet valve 16 and the guide 30 are moving in unison and act to all intents and purposes as a conventional poppet valve. The flow conditions in the intake port are not impaired in any way.

If it is desired to effect throttling at the intake valve, the member 34 is rotated by the worm gear 38 to raise the member 36 into a position in which it will abut the clip 32 before the end of the stroke of the tappet. The guide 30 will now move with the poppet valve 16 for only part of its stroke and when the abutment presented by the member 36 to the clip 32 is reached, the guide will be brought to a stop while the poppet valve continues towards its fully open position. Figures 4b and 4c show the positions of the poppet valve 16 and the guide 30 at the maximum cam lift for two different positions of the member 36.

In Figure 4b, the member 36 has prevented reciprocation of the guide 30 and therefore the latter has remained in the position where it presents a maximum throttling of the intake charge. Figure 4c, shows a similar view at part load when the charge is only partially throttled and the stroke of guide 30 is limited by the member 36 so that the guide is allowed to reciprocate but with an amplitude less than that of the poppet valve 16. The control of the stopped position of the guide 30 can in practice be varied continuously between the two limits represented by Fig. 4b and Fig. 4d thereby presenting a variable obstruction to the air flow independently of the position of the poppet valve which always opens to the same extent determined by the lift of the cam.

The control of the position of the member 36 may be effected directly from the accelerator pedal without the use of a control system. Because the degree of throttling cannot be determined with sufficient accuracy at idling for several engine cylinders, it is preferable to retain the main butterfly throttle and to use both forms of throttling in conjunction with one another.

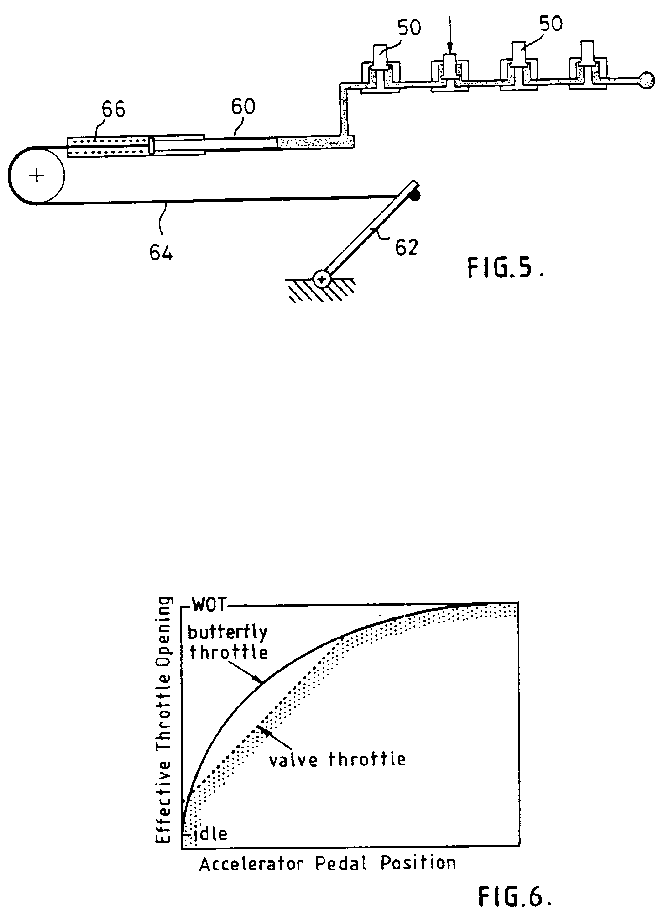

Figure 6 is a graph showing the combined throttling effect as a function of accelerator pedal position. Under very low load and idling conditions, the throttling at the valve is only partially effective and the butterfly valve, with its by-pass passage for idle speed control, is are used to regulate idle speed. Even at idle, the valve throttling will be effective during part of the stroke because the main butterfly throttle will only set the average flow rate and manifold vacuum but the air flow rate at the valve will still vary with piston velocity. Near the top and bottom dead centre positions of the piston, the air velocity will be minimal and at around 75° ATDC the air velocity will be maximum. The valve throttling will in this case still be effective near the positions of high piston velocity to improve in-cylinder charge turbulence but the engine power output will be determined by the main butterfly throttle.

As the pedal is depressed, the main butterfly throttle will open relatively rapidly and its resistance to flow will be less than the obstruction presented by the valve mechanism. The throttling is transferred gradually from the butterfly throttle to the valve as the accelerator pedal is progressively depressed.

There are several advantages to this use of a hybrid system. First, if the valve mechanism should for any reason cease to throttle the intake charge, the main butterfly is present as a fail safe. At idle, when balance between cylinders is critical to avoid lumpiness in the tick over of the engine, the butterfly, which is common to all the engine cylinders, is effective and ensure that all cylinders receive the same amount of charge. This not only means that good idle speed control remains possible but high manifold vacuum is available for braking.

On the other hand, at part load, the butterfly throttle gradually becomes less effective with increasing load and the effective throttling occurs mainly at the valve thereby improving engine efficiency because the reduction of manifold vacuum results in reducing pumping losses. Furthermore, high charge velocity is maintained at the valve under all conditions to improve combustion quality by improving in-cylinder mixture homogeneity and increasing charge turbulence and burn rate. Improved combustion quality improves idle and part load stability and, if desired, permits increased amounts of exhaust gas recirculation, in order to reduce NOₓ emissions.

The above advantages are relevant to the use of the valve mechanism of the invention in an intake port but the mechanism can also be used in an exhaust port. In this case, the scavenging of the cylinder can be impaired by obstructing the exhaust valve and this results in increased charge retention. Controlled exhaust gas recirculation can be provided internally in this way. The embodiment of the invention shown in Figure 3 differs from that described above only in the design of the stop for limiting the reciprocating movement of the valve guide 30. In place of the mechanical stop formed by the two members 34, 36, there is provided a hydraulic stop.

A modified insert 40′ is constructed as a cylinder for an annular piston 50 which projects from the upper end of the insert 40′. The lower end of the insert 40′ is closed off by a cover 54 which has a central annular boss received inside the annular piston 50 thereby defining an annular working chamber 52 to which hydraulic fluid can be supplied by a passage 56 formed in the cylinder head 10.

The lower end of the piston has a small lip which acts to limit the displacement of the piston 50 at the top of its travel and which also behaves as a hydraulic damper as fluid is forced past it during displacement of the piston. The valve guide 30 in this case passes through the centre of the boss of the cover 54.

One could supply fluid to the piston of each valve mechanism and once the piston 50 reaches the desired stop position the fluid may be trapped in the working chamber so that the piston acts as a rigid abutment analogous to the member 36 in the previously described embodiment. It is however preferred to employ a hydraulic circuit as shown in Figure 5 in which a single master cylinder 60 driven by the throttle pedal 62 through a cable 64 acting against a spring 66 is used to set the amount of hydraulic fluid available for all the pistons 50.

If enough fluid is present to push all the pistons into their uppermost positions, all the pistons are locked and the maximum throttling occurs in all engine cylinders. If however the master cylinder is moved to increase the combined volume by an amount equal to the desired displacement of one of the pistons then any one piston can at any one time be retracted by this desired amount. Since the pistons 50 are never depressed simultaneously by the valve train, this means that every piston 50 can be allowed in its turn to retract to the desired position, the displaced fluid being diverted to the piston that was previously retracted. The fluid therefore shunts between pistons. This has the advantage of ensuring that all stops are set equally. A further advantage is that noise is reduced. This is because the pistons 50 can be in permanent abutment with the clips 32 and the movement of the valve guide 30 and the piston 50 is damped. The hydraulic master cylinder 60 is designed in a known manner to allow bleeding and topping up.

It is to be noted that the embodiments of the invention are all compatible with engines having variable valve timing in that no modification whatever is required in the valve train and the mechanism of the invention does not interfere with the timing or duration of the event and affects only the flow resistance experienced by the charge when the valve is open.

The invention has been described above with reference to an engine having only one valve per cylinder but the invention also finds application in multi-valve engines. In such engines, the multiple intake valves present a larger valve skirt area which is highly desirable under high load conditions but if all inlet valves always open at the same time then the charge velocity is decreased under low and part load conditions. For this reason, it is desirable in such multi-valve engines to be able to disable some of the valves under low load conditions and a variety systems, known as valve deactivation systems, have been proposed for this purpose. In the present invention, it is possible effectively to deactivate one valve by allowing its valve guide to move to the maximum throttling position, without altering the throttling at the other valve. The air charge will now be diverted automatically to the more open valve thereby effectively rendering the throttled valve inoperative. The faster air flow in the more open valve will result in more swirl and turbulence.

It should be mentioned that the invention is not restricted to the stops described above and one can use electrically operated stop, or stops with discrete stop positions without departing from the scope of the invention as set forth in the appended claims.

As an example of such an electrically operated stop, one may provide a one-way axial clutch comprising balls retained in an annular cage surrounding the stem of the valve guide and acting between the stem of the guide and a surrounding conically downwardly tapering ramp surface or race. If the cage is displaced axially upwards by means of a solenoid, the balls lift off the ramp and disengage the clutch allowing free descent of the valve guide. It is possible to provide two position control of the valve guide by selectively engaging and disengaging the clutch, in which case the valve guide will either remain in a fixed position partially obstructing the port, or follow the valve and leave the port unonbstructed. Alternatively, the actuation of the solenoids may be timed in relation to the engine cycle so that the guide is arrested at any desired intermediate position.

## Claims

1. A valve mechanism disposed within a port of an internal combustion engine, comprising
a poppet valve (16) reciprocable with constant stroke relative to a valve seat (14) in the engine cylinder head under the action of a valve drive train, and
a valve guide (30) interposed between the poppet valve (16) and the engine cylinder head (10),
characterised in that
the valve guide (30) is reciprocably driven, through a spring (42), by the drive train of the poppet valve (16) in a direction to follow the movements of the poppet valve (16), and
an adjustable stop (36) is provided for limiting the stroke of the valve guide (30) relative to the valve seat (14) such that the guide (30) may be stopped at a variable point in its stroke, the end of the valve guide near the valve seat then presenting a variable obstruction to the air flow independently of the position of the poppet valve in relation to the valve seat.

2. A valve mechanism as claimed in claim 1, wherein the valve guide (30) is shaped as a thin sleeve having a complementary shape to that of the poppet valve.

3. A valve mechanism as claimed in claim 1 or 2, wherein the variable stop comprises a first abutment surface (32) fixed to the valve guide (30) and a second abutment surface formed by an annular member (36) surrounding the valve guide (30) and movably mounted on the cylinder head.

4. A valve mechanism as claimed in claim 3, wherein the annular member (36) is axially movable by means of a mechanical positioning system (34,38).

5. A valve mechanism as claimed in claim 3, wherein the annular member (50) is axially movable by means of a hydraulic positioning system (52,54).

6. A valve mechanism as claimed in claim 5, wherein damping means are provided in the hydraulic positioning system for damping the movement of the annular member (50).

7. A valve mechanism as claimed in claim 6 for use in an internal combustion engine having a plurality of valves, wherein the hydraulic positioning system comprises a master cylinder (60) and a plurality of slave cylinders each associated with a respective one of the annular members (50), fluid being displaced from one slave cylinder to another when an annular member is moved under the action of its associated valve guide.

8. A valve mechanism as claimed in claim 3, wherein the annular member (36) co-operates with an annular member (34) rotatable the axis of the valve guide (30) to vary the position of the variable abutment surface.

9. A valve mechanism as claimed in claim 1 or 2, wherein the adjustable stop for limiting the stroke of the valve guide (30) comprises a solenoid operated one-way clutch surrounding the valve guide.

10. A valve mechanism as claimed in any preceding claim, arranged in the intake port of an internal combustion engine.

11. An internal combustion engine having a plurality of valve mechanisms as claimed in claim 9, wherein the adjustable stops are linked for operation by the accelerator pedal, the valve mechanism acting in conjunction with a butterfly throttle to regulate the engine power output.

12. A valve mechanism as claimed in any one of claims 1 to 9, arranged in the exhaust port of an internal combustion engine.

13. A multiple intake valve engine having a valve mechanism as claimed in claim 1 for at least one intake port in each cylinder, to enable the port to be deactivated under low load operating conditions.

## Patentansprüche

1. Ein Ventilmechanismus, der in einem Durchgang eines Verbrennungsmotors angebracht ist, umfassend
ein Tellerventil (16), das mit konstantem Hub bezüglich eines Ventilsitzes (14) im Zylinderkopf des Motors unter der Wirkung eines Ventilgetriebes hin- und herbewegt werden kann, und
eine Ventilführung (30), die zwischen dem Tellerventil (16) und dem Zylinderkopf (10) des Motors eingefügt ist,
dadurch gekennzeichnet, daß
die Ventilführung (30) alternierend mittels einer Feder (42) durch das Getriebe des Tellerventils (16) längs einer Richtung betätigt wird, um der Bewegung des Tellerventils (16) zu folgen, und
ein einstellbarer Begrenzer (36) zum Begrenzen des Hubes der Ventilführung (30) bezüglich des Ventilsitzes (14) bereitgestellt ist, so daß die Ventilführung (30) an einem variablen Punkt längs ihres Hubes angehalten werden kann, wobei dann das Ende der Ventilführung in der Nähe des Ventilsitzes ein veränderliches Hindernis für den Luftfluß aufweist, unabhängig von der Stellung des Tellerventils bezüglich des Ventilsitzes.

2. Ein Ventilmechanismus nach Anspruch 1, worin die Ventilführung (30) als dünne Hülse mit einer Form, die jener des Tellerventils komplementär ist, gebildet ist.

3. Ein Ventilmechanismus nach Anspruch 1 oder 2, worin der variable Begrenzer eine erste Stoßfläche (32) umfaßt, die an der Ventilführung (30) angebracht ist, und eine zweite Stoßfläche, die durch ein ringförmiges Teil (36) gebildet ist, das die Ventilführung (30) umgibt und beweglich auf dem Zylinderkopf angebracht ist.

4. Ein Ventilmechanismus nach Anspruch 3, worin das ringförmige Teil (36) axial mittels eines mechanischen Positionsreglers (34, 38) bewegbar ist.

5. Ein Ventilmechanismus nach Anspruch 3, worin das ringförmige Teil (50) axial mittels eines hydraulischen Positionsreglers (52, 54) bewegbar ist.

6. Ein Ventilmechanismus nach Anspruch 5, worin eine dämpfende Vorrichtung im hydraulischen Positionsregler zum Dämpfen der Bewegung des ringförmigen Teils (50) bereitgestellt ist.

7. Ein Ventilmechanismus nach Anspruch 6 zur Verwendung in einem Verbrennungsmotor mit einer Vielzahl von Ventilen, worin der hydraulische Positionsregler einen Hauptzylinder (60) und eine Vielzahl von Nebenzylindern umfaßt, jeder mit einem entsprechenden ringförmigen Teil (50) ausgestattet, wobei Fluidum von einem Nebenzylinder zum anderen verdrängt wird, wenn ein ringförmiges Teil unter der Wirkung der dazugehörigen Ventilführung bewegt wird.

8. Ein Ventilmechanismus nach Anspruch 3, worin das ringförmige Teil (36) mit einem ringförmigen Teil (34) zusammenwirkt, das um die Achse der Ventilführung (30) zum Verändern der Stellung der einstellbaren Stoßfläche gedreht werden kann.

9. Ein Ventilmechanismus nach Anspruch 1 oder 2, worin der einstellbare Begrenzer zum Begrenzen des Hubes der Ventilführung (30) eine magnetische Einwegkupplung umfaßt, die die Ventilführung umgibt.

10. Ein Ventilmechanismus nach irgendeinem der vorhergehenden Ansprüche, der in der Einlaßöffnung eines Verbrennungsmotors angebracht ist.

11. Ein Verbrennungsmotor mit einer Vielzahl von Ventilmechanismen nach Anspruch 9, worin die einstellbaren Begrenzer zur Betätigung durch das Gaspedal angebracht sind, wobei der Ventilmechanismus mit einer Drosselklappe zum Regeln der Ausgabeleistung des Motors zusammenwirkt.

12. Ein Ventilmechanismus nach irgendeinem der Ansprüche 1 bis 9, der in der Auspufföffnung eines Verbrennungsmotors angebracht ist.

13. Ein Motor mit mehreren Einlaßventilen mit einem Ventilmechanismus nach Anspruch 1 für mindestens einen Einlaß in jedem Zylinder, um die Deaktivierung des Einlasses bei Betriebsbedingungen niedriger Belastung zu ermöglichen.

## Revendications

1. Mécanisme à soupape disposé à l'intérieur d'un conduit d'un moteur à combustion interne, comprenant
une soupape en champignon (16) pouvant se déplacer en va-et-vient avec une course constante par rapport à un siège de soupape (14) dans la culasse du moteur sous l'action d'un ensemble de distribution, et
un guide de soupape (30) interposé entre la soupape en champignon (16) et la culasse du moteur (10),
caractérisé en ce que
le guide de soupape (30) est déplacé en va-et-vient au travers d'un ressort (42) par l'ensemble de commande de la soupape en champignon (16) dans une direction afin de suivre les mouvements de la soupape en champignon (16), et
une butée réglable (36) est prévue pour limiter la course du guide de soupape (30) par rapport au siège de soupape (14) de telle sorte que le guide (30) puisse être arrêté au niveau d'un point variable de sa course, l'extrémité du guide de soupape proche du siège de soupape présentant alors un obstacle variable à l'écoulement de l'air indépendamment de la position de la soupape en champignon par rapport au siège de soupape.

2. Mécanisme à soupape selon la revendication 1, dans lequel le guide de soupape (30) a la forme d'un manchon mince ayant une forme complémentaire à celle de la soupape en champignon.

3. Mécanisme à soupape selon la revendication 1 ou 2, dans lequel la butée variable comprend une première surface de butée (32) fixée au guide de soupape (30) et une seconde surface de butée formée par un élément annulaire (36) entourant le guide de soupape (30) et monté de manière mobile sur la culasse.

4. Mécanisme à soupape selon la revendication 3, dans lequel l'élément annulaire (36) peut être déplacé axialement au moyen d'un système mécanique de positionnement (34, 38).

5. Mécanisme à soupape selon la revendication 3, dans lequel l'élément annulaire (50) peut être déplacé axialement au moyen d'un système hydraulique de positionnement (52, 54).

6. Mécanisme à soupape selon la revendication 5, dans lequel des moyens d'amortissement sont prévus dans le système hydraulique de positionnement pour amortir le déplacement de l'élément annulaire (50).

7. Mécanisme à soupape selon la revendication 6, destiné à être utilisé dans un moteur à combustion interne comportant une pluralité de soupapes, dans lequel le système hydraulique de positionnement comprend un maître cylindre (60) et une pluralité de cylindres esclaves associés chacun à l'un respectif des éléments annulaires (50), du fluide étant déplacé d'un premier cylindre esclave à un autre lorsqu'un élément annulaire est déplacé sous l'action de son guide de soupape associé.

8. Mécanisme à soupape selon la revendication 3, dans lequel l'élément annulaire (36) coopère avec un élément annulaire (34) pouvant être tourné autour de l'axe du guide de soupape (30) pour faire varier la position de la surface de butée variable.

9. Mécanisme à soupape selon la revendication 1 ou 2, dans lequel la butée réglable permettant de limiter la course du guide de soupape (30) comprend un embrayage unidirectionnel actionné par électroaimants à noyau plongeur entourant le guide de soupape.

10. Mécanisme à soupape selon l'une quelconque des revendications précédentes, disposé dans le conduit d'admission d'un moteur à combustion interne.

11. Moteur à combustion interne comportant une pluralité de mécanismes à soupape selon la revendication 9, dans lequel les butées réglables sont reliées afin d'être actionnées par la pédale de l'accélérateur, le mécanisme à soupape agissant en combinaison avec un papillon des gaz pour réguler la puissance du moteur.

12. Mécanisme à soupape selon l'une quelconque des revendications 1 à 9, disposé dans l'ouverture d'échappement d'un moteur à combustion interne.

13. Moteur à soupapes d'admission multiples comportant un mécanisme à soupape selon la revendication 1 pour un conduit d'admission au moins dans chaque cylindre, afin qu'il soit possible de désactiver l'admission dans des conditions de fonctionnement sous faible charge.
